# EUROPÄISCHE PATENTANMELDUNG

(11) **EP 4 787 645 A1**
(43) Veröffentlichungstag der Anmeldung: **05.08.2026**
(21) Anmeldenummer: 26153137.0
(22) Anmeldetag: 21.01.2026
(51) Int. Cl.: H02G 3/08, H02G 3/36

(54) **INSTALLATIONSDOSE, INSTALLATIONSDOSENZUSAMMENSTELLUNG SOWIE VERWENDUNG EINER SOLCHEN INSTALLATIONSDOSE**

(30) Priorität: 29.01.2025 DE 202025100442 U
(71) Anmelder: OBO Bettermann Hungary Kft, 2347 Bugyi (HU)
(72) Erfinder: KORTE, Thomas, 58708 Menden (DE); LUDWIG, Hendrik, 58706 Menden (DE)
(74) Vertreter: Haverkamp Patentanwälte PartG mbB

(57) **Zusammenfassung**

Die Erfindung betrifft eine Installationsdose 1 für elektrische/elektronische Anwendungen mit einem eine Basiswand 4 aufweisenden Basisteil 2 und einem das Basisteil 2 verschließenden, eine Deckelwand 6 aufweisenden Deckelteil 3, wobei das Basisteil 2 mit dem Deckelteil 3 bei geschlossener Installationsdose 1 gemeinsam einen Installationshohlraum einfassen, welche Installationsdose 1 eine Längserstreckung und eine Quererstreckung aufweist, wobei die Längserstreckung größer ist als die Quererstreckung.

Besonderes Kennzeichen ist, dass die Wand eines der beiden Teile - Basisteil 2 oder Deckelteil 3 - zur Installationsdosenaußenseite hin einen konkaven und die dieser Wand 4 bezüglich des Installationshohlraums gegenüberliegende Wand 6 des anderen Teils 3 - Deckelteil 3 oder Basisteil 2 - einen zur Außenseite der Installationsdose 1 hin konvexen Verlauf haben, wobei die jeweilige Krümmung in Richtung der Längserstreckung der Installationsdose 1 verläuft.

## Beschreibung

Gegenstand der Erfindung ist eine Installationsdose für elektrische/elektronische Anwendungen mit einem eine Basiswand aufweisenden Basisteil und einem das Basisteil verschließenden, eine Deckelwand aufweisenden Deckelteil, wobei das Basisteil mit dem Deckelteil bei geschlossener Installationsdose gemeinsam einen Installationshohlraum einfassen, welche Installationsdose eine Längserstreckung und eine Quererstreckung aufweist, wobei die Längserstreckung größer ist als die Quererstreckung. Gegenstand der Erfindung ist ferner eine Installationsdosenzusammenstellung mit einer solchen Installationsdose sowie eine Verwendung einer solchen Installationsdose.

Elektrotechnischen Installationen dienende Gehäuse sind beispielsweise Installationsdosen wie Unterputzdosen, Hohlwanddosen etc., aber auch Abzweigdosen, Schaltkästen oder dergleichen. Derartige Gehäuse sind typischerweise aus einem formstabilen Hartkunststoff hergestellt. Diesen Gehäusen ist gemein, dass Langgüter, also: Kabel oder Leerrohre, durch eine Wand des Gehäuses zum Anschließen an in einer solchen Installationsdose enthaltenen elektrischen und/oder elektronischen Geräten oder Aggregaten eingeführt werden sollen. Zu diesem Zweck verfügen derartige Installationsdosen in bestimmten Gehäuseabschnitten über vorbereitete Kabeleinführungen, durch die das entsprechende Langgut durch die Gehäusewand hindurchgeführt werden kann.

Wenn derartige Installationsdosen als Abzweigdosen ausgelegt sind, sind diese typischerweise quaderförmig konzipiert. Dies bedeutet, dass diese eine Längserstreckung und eine Quererstreckung aufweisen, bei der die Längserstreckung größer ist als die Quererstreckung. Neben den diesbezüglichen Erstreckungen ist das Installationsvolumen durch die Höhe der Installationsdose bestimmt. Derartige Installationsdosen verfügen über ein Basisteil und ein Deckelteil. Sowohl das Basisteil als auch das Deckelteil verfügen jeweils über eine Wand - eine Basiswand bzw. eine Deckelwand, die bei geschlossener Installationsdose bezüglich des Installationshohlraumes einander gegenüberliegend angeordnet sind. An die Wand des Basisteils ist eine umlaufende Seitenwand angeformt. Das Deckelteil mit seiner Deckelwand kann ebenfalls über eine umlaufende Seitenwand verfügen oder zumindest über eine umlaufende Struktur, um, die Seitenwand des Basisteils übergreifend, dieses verschließen zu können.

Es gibt Anwendungsfälle, bei denen eine solche Installationsdose als Abzweigdose in den Zwischenraum einer abgehängten Decke oder einer Hohlwand einzubringen ist, und zwar nachdem bereits die äußere Wandfläche oder Deckenschale montiert ist. Zum Positionieren einer solchen Installationsdose in den Schalenzwischenraum wird in die äußere Wand- oder Deckenschale eine Montageöffnung eingebracht, typischerweise mittels einer Kronenbohrung, um den erforderlichen Durchmesser bereitstellen zu können. Ein typischer Durchmesser einer solchen Kronenbohrung als Montageöffnung beträgt 58 mm. In Abhängigkeit von der Stärke der äußeren Wand- oder Deckenschale und der lichten Weite des Schalenzwischenraums können übliche, aus Hartmaterial, beispielsweise Hartkunststoff in Quaderform hergestellte Abzweigdosen nur mit einer recht geringen Größe durch die Montageöffnung in den Schalenzwischenraum eingeschwenkt werden. In vielen Fällen ist der durch eine solche Installationsdose bereitgestellte Installationshohlraum nicht groß genug, um die benötigten elektrischen/elektronischen Komponenten darin unterbringen zu können. In einem solchen Fall sind mehrere Abzweigdosen zu verwenden, was den Montageaufwand erhöht. Oftmals werden in einem solchen Fall Kabelverbindungen dann auch ohne den Schutz einer Installationsdose vorgenommen.

Um zu der vorstehend angesprochenen Problematik Abhilfe zu schaffen, ist in DE 20 2017 107 064 U1 vorgeschlagen worden, eine als Zwischenschalendose konzipierte Installationsdose als flexiblen Schlauch zu gestalten, der nur endseitig durch starre Kappen verschlossen ist. Aufgrund des flexiblen Schlauchabschnittes kann eine solche Installationsdose zum Einbringen in den Schalenzwischenraum sukzessive über die Länge seines Schlauchabschnittes durch Biegen deformiert werden, bis diese vollständig in den Schalenzwischenraum eingeschoben ist. Zwar kann dann die Installationsdose ein größeres Installationsvolumen aufweisen. Nachteilig ist jedoch, dass aufgrund des notwendigen Biegens des Schlauchabschnittes auf die darin befindlichen Kabel und insbesondere die hergestellten Kontakte bzw. Kabelverbindungen eine Zuglast wirkt, sodass die hergestellten Kontakte bzw. Kabelverbindungen beeinträchtigt werden können. Nicht geeignet sind derartige Installationsdosen zur Aufnahme von Platinen, da in einem solchen Fall die Gefahr besteht, dass im Zuge des Montageprozesses zum Einbringen der Installationsdose in einen Schalenzwischenraum infolge der erforderlichen Deformation des Schlauchabschnittes diese beschädigt werden oder gar brechen.

Ausgehend von diesem diskutierten Stand der Technik liegt der Erfindung daher die Aufgabe zu Grunde, eine insbesondere zur Verwendung als Zwischenschalendose vorgesehene Installationsdose vorzuschlagen, die nicht nur ein gegenüber herkömmlichen Hartkunststoffinstallationsdosen größeres Installationsvolumen hat, sondern bei der auch die vorstehend zu flexiblen Installationsdosen aufgezeigten Nachteile vermieden sind.

Gelöst wird diese Aufgabe erfindungsgemäß durch eine eingangs genannte, gattungsgemäße Installationsdose, bei der die Wand eines der beiden Teile - Basisteil oder Deckelteil - zur Installationsdosenaußenseite hin einen konkaven und die dieser Wand bezüglich des Installationshohlraums gegenüberliegende Wand des anderen Teils - Deckelteil oder Basisteil - einen zur Außenseite der Installationsdose hin konvexen Verlauf haben, wobei die jeweilige Krümmung in Richtung der Längserstreckung der Installationsdose verläuft.

Diese Installationsdose zeichnet sich neben ihrer Eigenschaft, dass diese aus einem Hartmaterial, typischerweise Kunststoff, ausgeführt ist, durch ihre besondere Formgebung aus. Die Installationsdose ist zumindest in einem ihrer Längserstreckung folgenden Dosenabschnitt nach Art einer Krümmung strukturiert. Diese Krümmung ist durch eine basisteil- oder deckelteilseitige an der Außenseite der Installationsdose konkave und bezüglich des anderen Teils konvexe Struktur bereitgestellt. Die Installationsdose kann auch insgesamt nur aus einem solchen Dosenabschnitt bestehen. Die vorgenannten Strukturen müssen nicht notwendigerweise im engeren Sinne gekrümmt, also kontinuierlich gekrümmt sein. Derartige Strukturen können auch durch eine der Längserstreckung der Installationsdose folgende Aneinanderreihung gerader Abschnitte bereitgestellt sein, die mit unterschiedlichem Neigungswinkel zur Erstellung der konkaven bzw. konvexen Struktur zueinander angeordnet sind. Durchaus möglich ist auch eine Ausgestaltung, bei der eines der beiden Teile - Basisteil oder Deckelteil - hinsichtlich seiner konkaven oder konvexen Strukturierung durch eine Aneinanderreihung gerader Abschnitte und das andere Teil eine Ausführung der Struktur mittels eines kontinuierlichen Krümmungsradius bereitgestellt ist. Wenn im Rahmen dieser Ausführungen auf konkav oder konvex gekrümmte Teile der Installationsdose Bezug genommen wird, schließt dieses eine jeweilige Grundform bereitstellende Aneinanderreihung von Flächenabschnitten, wie vorbeschrieben, ein.

Der Vorteil einer solchen Installationsdose ist vor allem dadurch begründet, dass aufgrund seiner besonderen Formgebung diese trotz größerer möglicher Längserstreckung und einer größeren Höhe und damit mit einem größeren Installationsvolumen durch eine enge Montageöffnung hindurch in einen Schalenzwischenraum mit begrenzter Weite eingebracht werden kann, verglichen mit einer herkömmlichen Installationsdose aus Hartmaterial. Die Konzeption dieser Installationsdose aus Hartmaterial, beispielsweise Kunststoff oder Aluminium, erlaubt einen Einbau auch von elektronischen Komponenten beispielsweise einer oder mehrerer Platinen, ohne die Beschädigungsgefahr derartiger Komponenten bei Verwendung einer flexiblen Installationsdose in Kauf nehmen zu müssen. Gleiches gilt für Kabelverbindungen und anderweitiger Kontakte. Die besondere Formgebung dieser Installationsdose erlaubt in Abhängigkeit von den jeweiligen Einbaugegebenheiten, wie der Stärke der äußeren Wand- oder Deckenschale sowie dem lichten Maß Zwischenschalenraums eine Vergrößerung des möglichen Installationsvolumens von 10% und mehr. Die konkave und konvexe Wandstruktur von Basisteil und Deckelteil kann hinsichtlich der jeweiligen Auslegung der Struktur unterschiedlich ausgeführt sein, wobei die konkave Struktur einen kleineren Krümmungsradius als die konkave Struktur aufweisen kann. Bei einer Auslegung der Installationsdose mit mit einem Radius ausgeführten Wandstrukturen ist der Krümmungsradius der konvex gekrümmten Wand kleiner als derjenige der konkav gekrümmten Wand.

In einem bevorzugten Ausführungsbeispiel ist die Basiswand diejenige Wand der Installationsdose, die die konkave Struktur aufweist, während die Deckelwand die konvexe Struktur aufweist.

Zur zusätzlichen Vergrößerung des Installationsvolumens ist in einem bevorzugten Ausführungsbeispiel vorgesehen, dass die Wand mit der konvex gekrümmten Struktur ihrer Basisfläche eine zur Außenseite hin ausgeprägte Sicke als Auswölbung trägt. Diese Sicke ist sowohl in Richtung der Längsals auch in Quererstreckung der Installationsdose gekrümmt. Dann ist der Krümmungsradius der durch eine solche Sicke bzw. Auswölbung bereitgestellten konvexen Struktur in Längserstreckung der Installationsdose typischerweise kleiner als derjenige in Quererstreckung. Eine solche Auslegung der Installationsdose hat nicht nur den Vorteil eines Installationshohlraumzugewinns. Aufgrund des durch eine solche Auswölbung gebildeten Scheitels der Deckelwand ist auch die Kontaktfläche zwischen der Installationsdose und der Außenseite einer inneren Schale ebenso wie die Kontaktfläche zwischen der Basiswand zur Innenseite einer äußeren Schale gegenüber herkömmlichen Zwischenschalendosen reduziert, sodass bedingt durch die geringere Kontaktfläche zwischen der Installationsdose und den benachbarten Schalen aufgrund der geringeren Reibung sich die Installationsdose in dem Schalenzwischenraum problemlos positionieren lässt.

Das Basisteil und/oder das Deckelteil verfügen jeweils über eine an die die gekrümmte Struktur aufweisende Wand angeformte umlaufende Seitenwand. Zur weiteren Vergrößerung des Installationshohlraumes ist in einer Weiterbildung einer solchen Ausgestaltung vorgesehen, den Übergang von der gekrümmt strukturierten Wand in die daran angeformte Seitenwand gerundet auszuführen. Mit Blick auf die kreisrunde Geometrie der Montageöffnung erlaubt dieses eine Vergrößerung der Quererstreckung ebenso wie in der Höhe der Installationsdose, verglichen mit einer Ausgestaltung, bei der der Übergang von der gekrümmt strukturierten Wand in eine umlaufende Seitenwand mit einer Eckausführung ausgeführt wäre.

In einem Ausführungsbeispiel einer solchen Installationsdose weisen sowohl das Basisteil als auch das Deckelteil jeweils eine an die gekrümmt strukturierte Wand angeformte umlaufende Seitenwand auf. Typischerweise ist die Seitenwand des Deckelteils dann so ausgelegt, dass diese die Seitenwand des Basisteils außenseitig übergreift. Dieses kann genutzt werden, damit Deckelteil und Basisteil durch komplementäre und miteinander in Eingriff stellbare Rastverbindungsglieder miteinander verbunden werden können. Neben einer solchen Verbindung von Basisteil und Deckelteil sind selbstverständlich auch andere Verbindungsarten möglich, beispielsweise dass das Deckelteil an das Basisteil mittels eines Scharniers, beispielsweise eine Filmscharniers an einer Seite angelenkt ist, während an der anderen Seite die beiden Teile durch Rastverbindungsglieder miteinander verbindbar sind. Auch eine Schraubverbindung oder eine anderweitige Verbindung unter Verwendung von Verbindungsmitteln ist möglich.

Die Langguteinführungen der Installationsdose befinden sich typischerweise in den Querseitenwänden derselben. Je nach Auslegung der Installationsdose können selbstverständlich auch Langguteinführungen in einer oder in beiden Längsseitenwänden angeordnet sein. In einem bevorzugten Ausführungsbeispiel sind die Langguteinführungen rechtswinklig zu der Basisfläche der Installationsdose angeordnet, damit eine Langguteinführung, also eine Einführung eines Rohrs und/oder eines Kabels rechtwinklig zu der Wand der Installationsdose möglich ist.

Bei dieser Installationsdose kann das Installationsvolumen in besonderer Weise dadurch vergrößert werden, dass an zumindest ein Ende des gekrümmten Dosenabschnittes eine Dosenverlängerung angeformt ist. Diese erstreckt sich somit in Richtung der Längserstreckung der Installationsdose. Um eine solche Dosenverlängerung mit einem größeren Installationsvolumen auslegen zu können, ist die Fortsetzung der strukturierten Wände des Dosenabschnittes in die jeweils angrenzenden Wände der Dosenverlängerung zumindest abschnittsweise gegensinnig zu der Strukturierung (Krümmung) in dem die strukturierten Wände umfassenden Dosenabschnitt strukturiert. Dies bedeutet, dass zwischen der gekrümmt strukturierten Wand an Basisteil und Deckelteil und der daran angeformten Wand in der Dosenverlängerung bezüglich der Krümmungsrichtung ein Wendepunkt oder ein unstrukturierter Wendeabschnitt vorhanden ist. Auf diese Weise kann eine solche Dosenverlängerung mit einer großen Länge ausgeführt werden, wodurch wiederum der Installationshohlraum deutlich vergrößert ist. In einem besonders bevorzugten Ausführungsbeispiel ist an beide Enden des gekrümmt strukturierten Dosenabschnittes jeweils eine solche Dosenverlängerung angeformt.

In Abhängigkeit von den an eine solche Installationsdose gestellten Anforderungen kann zwischen dem Deckelteil und dem Basisteil eine Dichtung angeordnet sein. Handelt es sich bei dem Basisteil und dem Deckelteil um Kunststoffspritzgussteile, kann eines der beiden Teile - Basisteil oder Deckelteil - als 2K-Teil ausgelegt sein, wobei die Dichtung dann als Weichkunststoffkomponente realisiert ist. Bei einer solchen Ausgestaltung bietet es sich an, auch die Langguteinführungen durch jeweils eine Weichkunststoffkomponente zu realisieren.

Bei einer Verwendung einer solchen Installationsdose als Zwischendecken- oder Zwischenwanddose, was eine bevorzugte Verwendung einer solchen Installationsdose ist, ist in einem Ausführungsbeispiel vorgesehen, dass zur Ausnutzung der unterschiedlichen lichten Weite eines Schalenzwischenraums eines der beiden Teile der Installationsdose - Basisteil oder Deckelteil - ein Gleichteil für Installationsdosen unterschiedlicher Höhe ist, während das andere Teil - Deckelteil oder Basisteil - in Anpassung an die unterschiedliche lichte Weite eines Schalenzwischenraumes mit bezüglich ihrer Höhe unterschiedlichen Varianten vorliegt. Dann kann ein und dasselbe Teil, beispielsweise ein und dasselbe Basisteil, mit einem die lichte Weite des Schalenzwischenraums ausnutzendem Deckelteil bestückt werden.

Die Erfindung ist nachfolgend anhand von Ausführungsbeispielen unter Bezugnahme auf die beigefügten Figuren beschrieben. Es zeigen:
- **Fig. 1:**: Eine perspektivische Ansicht einer erfindungsgemäßen Installationsdose,
- **Fig. 2:**: eine Längsseitenansicht der Installationsdose der Figur 1,
- **Fig. 3:**: eine Querseitenansicht der Installationsdose der Figur 1,
- **Fig. 4a - 4d:**: eine Montageschrittfolge zum Einbringen der Installationsdose der vorstehenden Figuren in einen Zwischendeckenhohlraum, und zwar in einem ersten Schritt, in dem die Installationsdose durch eine Montageöffnung hindurchgeführt wird (Figuren 4a, 4b), beim weiteren Hindurchschieben derselben durch die Montageöffnung in den Zwischendeckenhohlraum hinein (Figur 4c) und in ihrer Endposition in dem Zwischendeckenhohlraum (Figur 4d),
- **Fig. 5:**: die Längsseitenansicht der Installationsdose der vorstehenden Figuren im Vergleich mit der Umrissgeometrie einer herkömmlichen als Zwischendeckendose gleicher Länge verwendeten Installationsdose und
- **Fig. 6:**: eine perspektivische Darstellung einer weiteren erfindungsgemäßen Installationsdose.

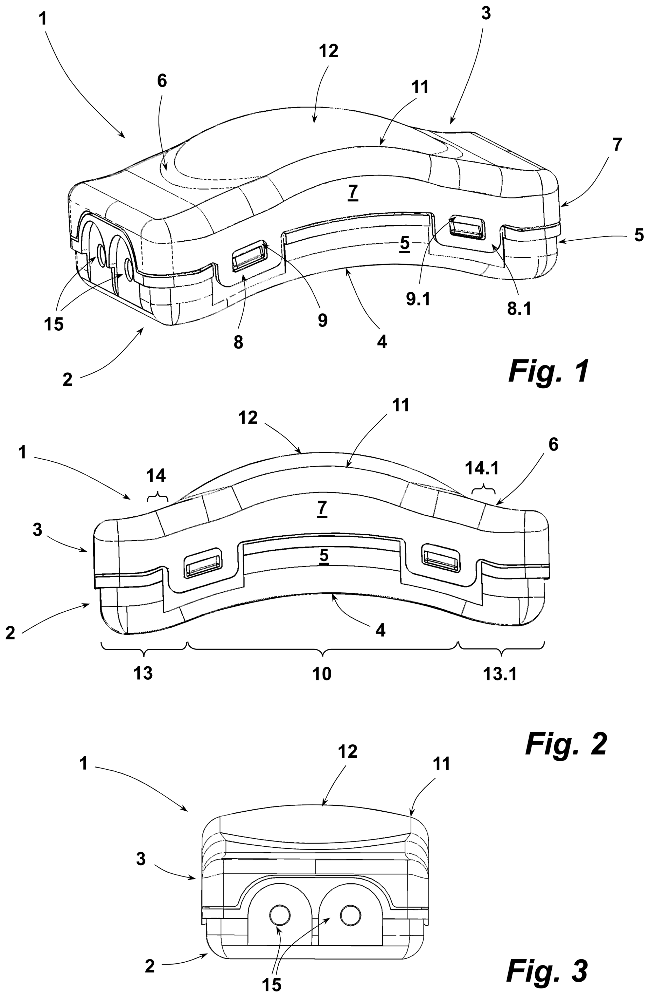

Eine Installationsdose 1 dient zur Aufnahme von elektrischen/elektronischen Komponenten, beispielsweise Kabelverbindern oder auch elektronischer Komponenten. Die Installationsdose 1 ist als Abzweigdose zur Verwendung als Zwischendecken- oder Zwischenwanddose konzipiert. Die Installationsdose 1 umfasst ein Basisteil 2 sowie ein Deckelteil 3. Das Basisteil 2 umfasst eine untere Basiswand 4 (siehe auch Figuren 2 und 3). An diese ist außenseitig umlaufend eine nach oben zum Deckelteil 3 hin abragende Seitenwand 5 angeformt. Die Basisfläche des Basisteils 2 ist rechteckförmig. Der Übergang von der Basiswand 4 in die umlaufende Seitenwand 5 ist gerundet ausgeführt. Das Deckelteil 3 umfasst eine Deckelwand 6 und ebenfalls daran außenseitig angeformt eine nach unten zum Basisteil 2 abragende umlaufende Seitenwand 7. Die Kantenausbildung ist ebenso ausgeführt wie der Übergang von der Seitenwand 5 in die Basiswand 4 des Basisteils 2. Durch das Basisteil 2 und das Deckelteil 3 wird jeweils ein Aufnahmevolumen bereitgestellt, die bei aus Basisteil 2 und Deckelteil 3 zusammengesetzter Installationsdose 1 ein Installationsvolumen einschließen. Bei dem dargestellten Ausführungsbeispiel tragen die längsseitigen Seitenwandabschnitte 7 des Deckelteils 3 zum Basisteil 2 hin weisende Fortsätze 8, 8.1 mit jeweils einer langlochartigen Rastdurchbrechung 9, 9.1 als Rastverbindungsglieder. Der in Figur 1 nicht erkennbare rückwärtige längsseitige Seitenwandabschnitt ist ebenfalls mit derartigen Rastverbindungsgliedern ausgestattet.

An zu den Rastdurchbrechungen 9, 9.1 komplementärer Position trägt die Seitenwand 5 des Basisteils 2 jeweils eine Rastnase, von denen jeweils eine in eine Rastdurchbrechung 9, 9.1 bei das Basisteil 2 verschließenden Deckelteil 3 eingreift.

Die zueinander weisenden Enden der Seitenwände 5, 7 von Basisteil 2 und Deckelteil 3 sind ausgebildet, damit die deckelteilseitige Seitenwand 7 die basisteilseitige Seitenwand 5 außenseitig übergreift.

Von Besonderheit bei der Installationsdose ist ihre Formgebung. Die Installationsdose 1 verfügt über einen gekrümmten Dosenabschnitt 10. Bei dem dargestellten Ausführungsbeispiel ist dieser Dosenabschnitt 10 der mittlere Abschnitt in Bezug auf die Gesamtlängserstreckung der Installationsdose 1. Dieser Dosenabschnitt 10 zeichnet sich durch eine konkave Krümmung der Basiswand 4 sowie eine konvexe Krümmung der Deckelwand 6 aus. Beide Krümmungen sind bei dem dargestellten Ausführungsbeispiel mit kontinuierlicher Krümmung ausgeführt. Zusätzlich zu der in Figur 2 mit dem Bezugszeichen 11 kenntlich gemachten Krümmung der Deckelwand 6 ist in dieser zum Erzielen einer Installationshohlraumvergrößerung zusätzlich eine nach außen ausgestellte Sicke 12 als Auswölbung vorgesehen. Durch diese wird die effektive Höhe der Installationsdose 1 um das Tiefenmaß der Sicke 12 vergrößert. Somit überlagert die konvexe Krümmung der Sicke 12 die grundsätzliche konvexe Krümmung 11 der Deckelwand 6. Die Krümmung der Basiswand 4 sowie diejenige der Deckelwand 6 folgen der Längserstreckung der Installationsdose 1. Die Längserstreckung der Installationsdose 1 ist größer als ihre Quererstreckung.

Die Sicke 12 ist, wie aus Figur 3 ersichtlich, nicht nur in Richtung der Längserstreckung der Installationsdose 1 konvex gekrümmt, sondern auch in Querrichtung dazu. Der Krümmungsradius der Sicke 12 in Querrichtung ist deutlich größer als derjenige, der Krümmung in Richtung der Längserstreckung der Installationsdose 1.

An den bei dem dargestellten Ausführungsbeispiel mittleren, gekrümmt ausgeführten Dosenabschnitt 10 der Installationsdose 1 schließt sich an die beiden, in Richtung der Längserstreckung weisenden Enden jeweils eine Dosenverlängerung 13, 13.1 an, durch die die Längserstreckung der Installationsdose 1 verlängert und somit das von der Installationsdose 1 eingefasste Installationsvolumen vergrößert wird. Die Basiswand 4 setzt sich in die untere Wand der jeweiligen Dosenverlängerung 13, 13.1 fort. In den Dosenverlängerungen 13, 13.1 ist die Krümmung der Basiswand 4 gegensinnig zu derjenigen in dem mittleren Dosenabschnitt 10. Bei dem dargestellten Ausführungsbeispiel befindet sich der Wendepunkt hinsichtlich der Krümmung der Basiswand 4 an der Schnittstelle zwischen dem gekrümmten Dosenabschnitt 10 und der jeweiligen Dosenverlängerung 13 bzw. 13.1. Die Deckelwand 6 setzt sich in die obere Wand der jeweiligen Dosenverlängerung 13, 13.1 ebenfalls fort, wobei auch diese Wandabschnitte der Deckelwand 6 gegensinnig zu der Krümmung in dem mittleren Dosenabschnitt 10 gekrümmt sind. Bei dem dargestellten Ausführungsbeispiel geht die konvexe Krümmung 11 der Deckelwand 6 des mittleren Dosenabschnittes 10 nicht in einem Wendepunkt in die gegensinnige Krümmung dieser Wand in die Dosenverlängerung 13, 13.1 über, sondern unter Zwischenschaltung eines kurzen, in Richtung der Längserstreckung ungekrümmten Abschnittes 14, 14.1.

Die Übergänge der Basiswand in die umlaufene Seitenwand 5 und der Deckelwand 6 in die umlaufende Seitenwand 7 sind, wie aus den Figuren erkennbar, gerundet ausgeführt.

Das Basisteil 2 und das Deckelteil 3 sind bei dem dargestellten Ausführungsbeispiel aus einem für Abzweigdosen üblichen Hartkunststoff hergestellt. Bei dem dargestellten Ausführungsbeispiel ist die Installationsdose 1 an ihren Querseitenwänden mit Langguteinführungen 15 (siehe auch Figur 3) ausgestattet. Die Langguteinführungen 15 sind aus einer Weichkunststoffkomponente hergestellt, die durch Einstechen mit beispielsweise einem Kabel problemlos geöffnet werden können. Mithin handelt es sich bei dem Basisteil 2 des dargestellten Ausführungsbeispiels um ein 2K-Spritzgussteil. Neben den an beiden Querseitenwänden befindlichen Langguteinführungen 15 ist auch der obere Rand der Seitenwand 5 mit einer Dichtung aus derselben Weichkunststoffkomponente ausgerüstet, durch die eine Abdichtung mit dem Deckelteil 3 gegeben ist.

Die Installationsdose 1 eignet sich in besonderem Maße für eine Verwendung als Zwischendecken- oder Zwischenwanddose. Dieses ist nachstehend anhand der Figurenfolge 4a bis 4d erläutert. Schematisiert zeigt 4a einen Deckenaufbau mit einer tragenden Decke 16 als innere Schale und einer von dieser abgehängten Schale, einer äußeren Deckenschale 17. Die Deckenschale 17 ist in nicht näher dargestellter Art und Weise an der Decke 16 mit Abstand zu dieser befestigt. Der Schalenzwischenraum ist in der Figurenfolge mit dem Bezugszeichen 18 kenntlich gemacht.

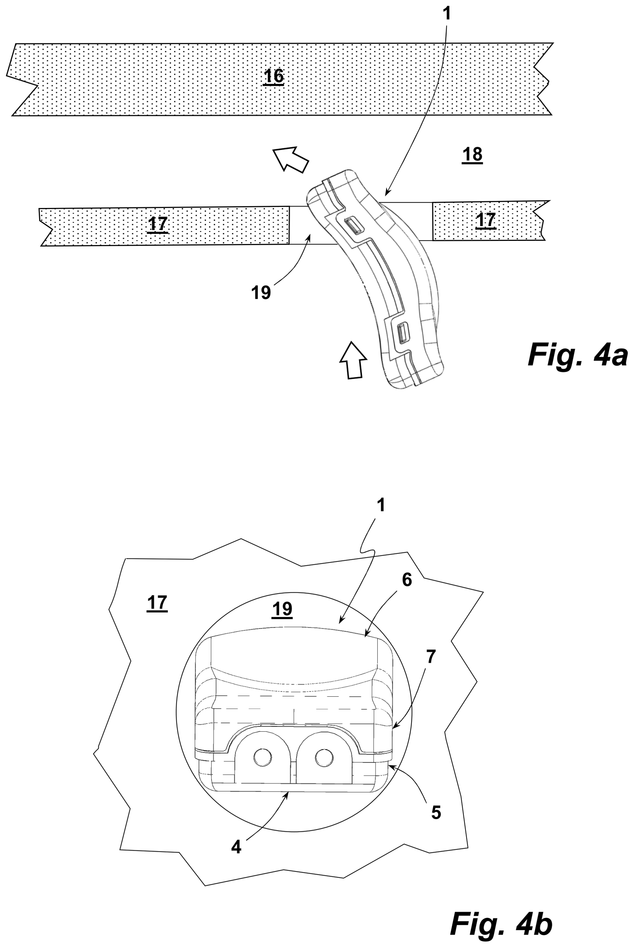

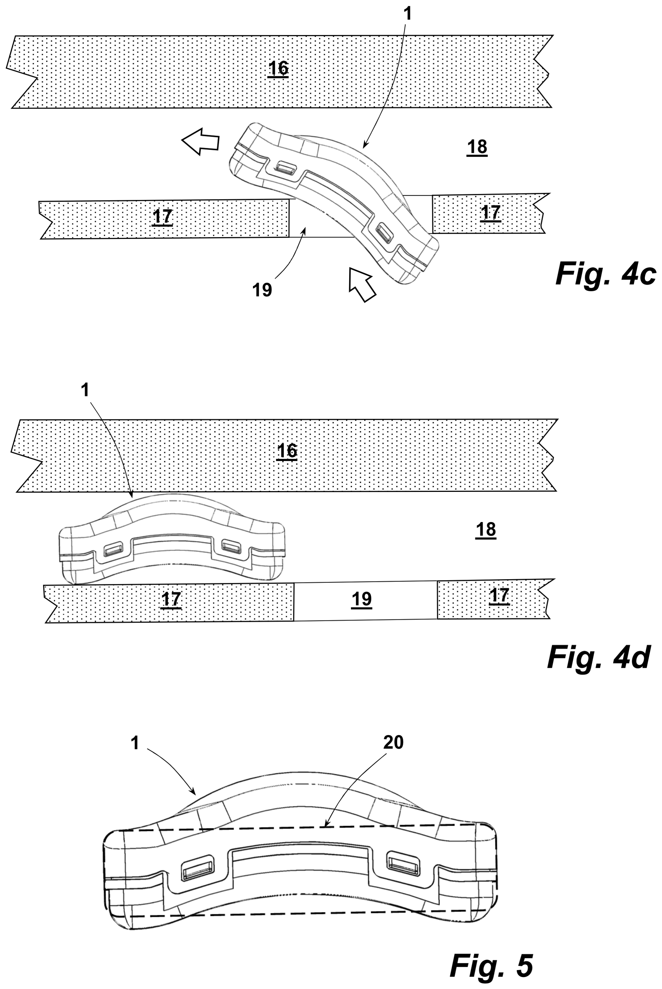

In die Deckenschale 17 ist mittels einer Kronenbohrung eine Montageöffnung 19 eingebracht. Diese hat eine kreisförmige Umrissgeometrie (siehe Figur 4b). Die Montageöffnung 19 dient zum Einbringen einer Installationsdose 1 in den Schalenzwischenraum. Die Installationsdose 1 dient bei dem dargestellten Ausführungsbeispiel als Abzweigdose. Die elektrischen Zu- und Ableitungen sind der Einfachheit halber nicht dargestellt. Die Installationsdose 1 wird mit ihrem einen querseitigen Ende in die Montageöffnung 19 eingesetzt und sukzessive, wie durch die Blockpfeile kenntlich gemacht, durch diese hindurchgeschoben. Die besondere Formgebung der Installationsdose 1 ermöglicht es trotz relativ geringer lichten Weite der Montageöffnung 19 sowie des Schalenzwischenraums 18 diese mit relativ großem Installationsvolumen in den Schalenzwischenraum 18 einzubringen. Figur 4b zeigt die Einsetzsituation der Figur 4a, die die Installationsdose 1 in einer längsseitigen Seitenansicht zeigt, in einer Querseitenansicht. In dieser Darstellung ist ersichtlich, dass die Querschnittsfläche der Installationsdose 1 die Montageöffnung 19 ausfüllt, und zwar mit relativ großer Querschnittsfläche, wozu auch die abgerundeten Kanten im Übergang von der Deckelplatte 6 in die Seitenwand 7 und der Basisplatte 4 in die Seitenwände 5 beitragen. Ist die Installationsdose 1 durch die Montageöffnung 19 hindurchgeführt, wird diese an der vorgesehenen Stelle in dem Schalenzwischenraum 18 positioniert (siehe Figur 4d).

Das durch die beschriebene besondere Formgebung der Installationsdose bereitgestellte Installationsvolumen ist, verglichen mit einer Installationsdose mit derselben Längserstreckung in einer Ausführung gemäß dem Stand der Technik (gerade, ungekrümmte Ausführung), mit der sich diese durch die Montageöffnung 19 in den Schalenzwischenraum 18 einsetzen ließe, bei dem dargestellten Ausführungsbeispiel um etwa 10% höher. Bei anderen Geometrien, insbesondere auch in Bezug auf die Installationsumgebung kann das durch eine solche Installationsdose bereitgestellte Installationsvolumen auch um einen höheren Prozentsatz höher sein im Vergleich zu einer Installationsdose gemäß dem Stand der Technik mit derselben Längserstreckung. Eine Gegenüberstellung der Installationsdose 1 mit einer herkömmlichen Hartkunststoffabzweigdose mit gleicher Länge ist in Figur 5 gezeigt. Die herkömmliche Installationsdose ist gestrichelt angedeutet und mit dem Bezugszeichen 20 kenntlich gemacht. Das signifikant größere Installationsvolumen der erfindungsgemäßen Installationsdose 1 ist deutlich zu erkennen.

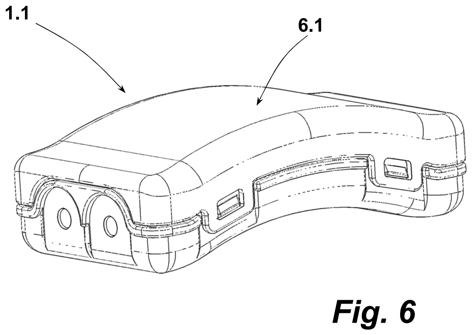

Figur 6 zeigt eine weitere Installationsdose 1.1 die prinzipiell genauso aufgebaut ist wie die Installationsdose 1. Diese unterscheidet sich von der Installationsdose 1 lediglich dadurch, dass deren Deckelwand 6.1 keine Auswölbung bzw. Sicke trägt. Im Übrigen gelten somit die Ausführungen zu der Installationsdose 1 gleichermaßen für die Installationsdose 1.1.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1, 1.1: Installationsdose
- 2: Basisteil
- 3: Deckelteil
- 4: Basiswand
- 5: Seitenwand
- 6, 6.1: Deckelwand
- 7: Seitenwand
- 8, 8.1: Fortsatz
- 9, 9.1: Rastdurchbrechung
- 10: Dosenabschnitt
- 11: Konkave Krümmung
- 12: Aufwölbung/Sicke
- 13, 13.1: Dosenverlängerung
- 14, 14.1: Ungekrümmter Abschnitt
- 15: Langguteinführung
- 16: Deckel
- 17: Deckenschale
- 18: Schalenzwischenraum
- 19: Montageöffnung
- 20: Umriss einer Installationsdose gemäß dem Stand der Technik

## Patentansprüche

1. Installationsdose für elektrische/elektronische Anwendungen mit einem eine Basiswand (4) aufweisenden Basisteil (2) und einem das Basisteil (2) verschließenden, eine Deckelwand (6) aufweisenden Deckelteil (3), wobei das Basisteil (2) mit dem Deckelteil (3) bei geschlossener Installationsdose (1) gemeinsam einen Installationshohlraum einfassen, welche Installationsdose (1) eine Längserstreckung und eine Quererstreckung aufweist, wobei die Längserstreckung größer ist als die Quererstreckung, **dadurch gekennzeichnet, dass** die Wand eines der beiden Teile - Basisteil (2) oder Deckelteil (3) - zur Installationsdosenaußenseite hin einen konkaven und die dieser Wand (4) bezüglich des Installationshohlraums gegenüberliegende Wand (6) des anderen Teils (3) - Deckelteil (3) oder Basisteil (2) - einen zur Außenseite der Installationsdose (1) hin konvexen Verlauf haben, wobei die jeweilige Krümmung in Richtung der Längserstreckung der Installationsdose (1) verläuft.

2. Installationsdose nach Anspruch 1, **dadurch gekennzeichnet, dass** die konkave und konvexe Strukturierung der Basiswand (4) und der Deckelwand (6) mit einer kontinuierlichen Krümmung ausgeführt ist.

3. Installationsdose nach Anspruch 2, **dadurch gekennzeichnet, dass** der Krümmungsradius der in Längserstreckung der Installationsdose (1) konvex gekrümmten Basisfläche der Wand (4) kleiner ist als der Krümmungsradius der konkav gekrümmten Wand (6).

4. Installationsdose nach einem der Anspüche 1 bis 3, **dadurch gekennzeichnet, dass** die in Längserstreckung der Installationsdose (1) konvex gekrümmte Wand (6) eine nach Art einer Sicke, in Richtung der Längs- und Quererstreckung der Installationsdose (1) gekrümmte Auswölbung (12), aufgesattelt auf die Basisfläche dieser Wand (6), aufweist

5. Installationsdose nach Anspruch 4, **dadurch gekennzeichnet, dass** der Krümmungsradius der konvexen Struktur der Aufwölbung (12) in Längserstreckung kleiner ist als derjenige in Quererstreckung.

6. Installationsdose nach einem der Ansprüche 1 bis 5, **dadurch gekennzeichnet, dass** das Basisteil (2) und das Deckelteil (3) jeweils über eine an die konkav bzw. konvex strukturierte Wand (4, 6) angeformte umlaufende Seitenwand (5, 7) aufweisen.

7. Installationsdose nach Anspruch 6, **dadurch gekennzeichnet, dass** der Übergang der jeweils durch ihre Krümmung strukturierten Wand (4, 6) in die daran angeformte Seitenwand (5, 7) gerundet ausgeführt ist.

8. Installationsdose nach Anspruch 6 oder 7, **dadurch gekennzeichnet, dass** das Deckelteil (3) und das Basisteil (2) zueinander komplementäre und um Verschließen des Basisteils (2) mit dem Deckelteil (3) miteinander in Eingriff stellbare Rastverbindungsglieder (8, 9; 8.1, 9.1) tragen.

9. Installationsdose nach einem der Ansprüche 1 bis 8, **dadurch gekennzeichnet, dass** zumindest in einer der beiden Querseitenwänden der Installationsdose (1) eine oder mehrere Langguteinführungen (15) angeordnet sind.

10. Installationsdose nach einem der Ansprüche 1 bis 9, **dadurch gekennzeichnet, dass** an zumindest ein Ende des die durch ihre Krümmung strukturierten Wandabschnitte (10) umfassenden Dosenabschnittes (10) eine Dosenverlängerung (13, 13.1) zur Vergrößerung des Installationshohlraums in Richtung der Längserstreckung der Installationsdose (1) angeformt ist.

11. Installationsdose nach Anspruch 10, **dadurch gekennzeichnet, dass** der Übergang bzw. die Fortsetzung der gekrümmten Wand (4, 6) von Basisteil (2) und Deckelteil (3) in die jeweilige Dosenverlängerung (13, 13.1) zumindest abschnittsweise gegensinnig gekrümmt zur Krümmung in den gekrümmten Wänden (4, 6) ausgeführt ist.

12. Installationsdose nach Anspruch 11, **dadurch gekennzeichnet, dass** zwischen der in Längserstreckung der Installationsdose (1) konvex strukturierten Wand (6) und der Dosenverlängerung (13, 13.1) mit seinem Abschnitt gegensinniger Strukturierung ein in Richtung der Längserstreckung der Installationsdose (1) ungekrümmter Wandabschnitt (14, 14.1) angeordnet ist.

13. Installationsdose nach einem der Ansprüche 10 bis 12, **dadurch gekennzeichnet, dass** an beide Enden des die strukturierten Wände (4, 6) umfassenden Dosenabschnittes (10) jeweils eine Dosenverlängerung (13, 13.1) angeformt ist.

14. Installationsdosenzusammenstellung, umfassend eine Installationsdose (1) nach einem der Ansprüche 1 bis 13 sowie zumindest ein zusätzliches Basis- oder Deckelteil, wobei das zusätzliche Basis- oder Deckelteil eine unterschiedliche Höhe gegenüber dem anderen Basis- oder Deckelteil der Installationsdose (1) aufweist.

15. Verwendung einer Installationsdose (1) nach einem der Ansprüche 1 bis 13 als Zwischendecken- oder Zwischenwanddose, angeordnet zwischen einer äußeren Decken- oder Wandschale (17) und einer benachbart und mit Abstand zu dieser angeordneten inneren Schale (16), wobei die Installationsdose (1) durch eine Montageöffnung (19) der äußeren Wand- oder Deckenschale (17) hindurch in den Schalenzwischenraum (18) eingebracht worden ist.
